# EUROPEAN PATENT SPECIFICATION

(11) **EP 3 364 768 B1**
(45) Date of publication and mention of the grant of the patent: **03.07.2019**
(21) Application number: 16784850.6
(22) Date of filing: 18.10.2016
(51) Int. Cl.: A23D 7/005, A23D 9/007

(54) **COMPOSITION COMPRISING AN OIL PHASE**
ZUSAMMENSETZUNG MIT EINER ÖLPHASE
COMPOSITION COMPRENANT UNE PHASE HUILEUSE

(30) Priority: 19.10.2015 EP 15190467
(43) Date of publication of application: 29.08.2018
(73) Proprietor: Unilever N.V., 3013 AL Rotterdam (NL); Unilever PLC, London, Greater London EC4Y 0DY (GB)
(72) Inventor: FLENDRIG, Leonardus, Marcus, 3133 AT Vlaardingen (NL); VAN DER HIJDEN, Hendrikus, Theodorus, W, M, 3133 AT Vlaardingen (NL)
(74) Representative: van den Brom, Coenraad Richard
(86) International application number: PCT/EP2016/074973
(87) International publication number: WO 2017/067926

(56) References cited:
- EP-A1- 1 920 667
- WO-A1-2011/044190
- WO-A2-00/22939
- US-A1- 2005 123 668

## Description

### FIELD OF THE INVENTION

The present invention relates to a composition comprising an oil phase, in particular to a composition comprising a structured oil phase. The invention also relates to a method for preparing a composition comprising a structured oil phase.

### BACKGROUND TO THE INVENTION

Compositions comprising an oil phase have many applications. For example, there are many food compositions that consist essentially of such oil phases, such as for example many shortening compositions, oil-continuous meal-makers like herb pastes (e.g. pesto) and peanut butter. There are even more food compositions, that have an oil phase in combination with other phases. In either case there is a general desire to control the rheological or textural properties of such compositions by structuring the oil phase. Traditionally compositions such as shortenings, butters, margarines and similar products have been structured by the use of at least a portion of hard fat in the oil phase. However, it is desirable to reduce the amount of hard fat required to structure such oil phases, because hard fat is frequently associated with increased cost, limited natural availability from species that have undesirable environmental impact (such as palm oil), or adverse effects on consumer health.

US 2011/0281015 A1 discloses shortening compositions comprising hard fat, liquid oil and cellulose fibre. However, satisfactory structuring requires relatively high amounts of about 4 wt% or more of the used cellulose fibres, which still need to be combined with appreciable amounts of hard fat. Likewise, US 2013/0202771 A1 discloses fat spreads with an oil and a water phase, in which the oil phase comprises cellulose fibres. The structuring of the example spreads provided in that document also depends on the presence of hard fat (e.g. hydrogenated fats) and relatively high amounts of cellulose fibres.

Puffing and popping of maize kernels, especially of popcorn is well known (see for instance Gayatri Mishra et al [Popping and Puffing of Cereal Grains: A Review, JOURNAL OF GRAIN PROCESSING AND STORAGE Vol 1, Iss 2, P34-46 (2014)] Popped popcorn is widely consumed as a snack. Ground popcorn is sometimes used in baking applications, replacing flour or cornflour.

WO 2011/044190 A1 discloses trans-fat replacement systems including an expanded low-density carbohydrate and at least one edible oil, wherein the edible oils are saturated oils. In one embodiment, popped popcorn is ground and mixed with an oil, preferably palm oil, to achieve a thickened consistency usable as a popping fat in a popcorn product.

EP 1 920 667 A1 relates to a safe and stable edible material having a reinforced concrete-like structure. In one embodiment, popcorn (swollen corn) was dried by lyophilisation. The sponge-shaped porous solid that was obtained was impregnated with extra virgin olive oil under reduced pressure.

It is an object of the present invention to provide a composition that overcomes one or more of the problems observed in the prior art as described above.

It is an object of the present invention to provide alternative ways of modifying the rheology and/or structuring oil phases.

It is a particular object of the present invention to provide structuring or rheological modification to oil phases whilst reducing the need to use hardstock fat or other undesirable rheology modifiers or additives.

It is another object of the present invention to provide compositions comprising an oil phase with improved rheological properties or improved structuring, preferably whilst such compositions comprise relatively less hardstock fat.

It is a further object of the present invention to provide such compositions in the form of edible compositions, in particular with desirable organoleptic properties, such as for instance a smooth mouthfeel.

It is another object of the present invention to provide a method for preparing compositions comprising an oil phase, wherein the oil phase has controllable rheological properties.

It is a particular object of the present invention to provide a method for preparing a composition comprising a structured oil phase, with a reduced amount of hardstock fat, but with similar or even improved structuring.

### DEFINITION OF THE INVENTION

We have surprisingly found that one or more of these objects can be achieved by the present invention. In particular, we found that particles of puffed maize kernel endosperm and hardstock fat can be used synergistically to modify the rheological properties of oil compositions. We found that such structuring is effectively achieved at surprisingly low concentrations of both the particles of puffed maize kernel endosperm and hardstock fat with regard to the total oil phase. Puffed popcorn was found to be particularly effective as a source of suitable particles of puffed maize kernel endosperm.

Application of such particles of puffed maize kernel endosperm in compositions comprising an oil phase is highly advantageous, because maize and in particular popcorn is a material that is easily available. Moreover, edible compositions according to the invention, generally have a pleasant mouthfeel by virtue of the combination of the particles of puffed maize kernel endosperm and hardstock fat. In view of their easy preparation and easy dispersal in an oil phase, the process of structuring such an oil phase with such a combination of particles and hardstock fat can readily be optimised to suit the needs of different compositions.

Therefore, according to a first aspect, the invention provides a composition comprising a structured oil phase, wherein the oil phase comprises
a. liquid oil;
b. from 1 to 20 wt-% of hardstock fat with regard to the weight of the oil phase; and
c. from 0.5 to 20 wt-% with regard to the weight of the oil phase of particles of puffed maize kernel endosperm, dispersed in said oil phase, wherein upon sieving at least 80 wt% of said particles passes a sieve with apertures of 500 µm

According to a second aspect, the invention provides a method for the preparation of a composition according to the invention, wherein the method comprises the steps of
a. providing the particles of puffed maize kernel endosperm;
b. providing at least a first part of the liquid oil;
c. providing the hardstock fat;
d. preparing a molten mixture of the hardstock fat and the at least first part of the liquid oil
e. dispersing said particles in said molten mixture; and
f. crystallising the hardstock fat in the mixture comprising the dispersed particles.

According to a third aspect, the invention provides use of a synergistic combination of hardstock fat and particles of puffed maize kernel endosperm to structure the oil phase of a composition comprising an oil phase, wherein upon sieving at least 80 wt% of said particles passes a sieve with apertures of 500 µm; and wherein the oil phase comprises from 1 to 20 wt-% of said hardstock fat and from 0.5 to 20 wt-% of said particles with regard to the weight of the oil phase.

### BRIEF DESCRIPTION OF FIGURES

**Figure 1** is a micrograph of a popcorn particle, obtained by SEM.
**Figure 2** is another micrograph of the popcorn particle.

### DETAILED DESCRIPTION OF THE INVENTION

Any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Moreover, weight percentage (wt. %) is based on the total weight of the product unless otherwise stated. Except in the operating and comparative examples, or where otherwise explicitly indicated, all numbers in this description indicating amounts of material or conditions of reaction, physical properties of materials and/or use are to be understood as modified by the word "about". Unless specified otherwise, numerical ranges expressed in the format "from x to y" are understood to include x and y. When for a specific feature multiple preferred ranges are described in the format "from x to y", it is understood that all ranges combining the different endpoints are also contemplated. For the purpose of the invention ambient temperature is defined as a temperature of about 20 degrees Celsius.

In the context of this description the terms 'fat' and 'oil' are used interchangeably unless specified otherwise. Where applicable the prefix 'liquid' or 'solid' is added to indicate if the fat or oil is liquid or solid at ambient temperature as understood by the person skilled in the art. The term 'hardstock' refers to a fat that is solid at ambient temperature.

In the context of this invention, 'puffing' refers to a process in which endosperm material is expanded, by heating the endosperm material to gelatinise the starch, followed by a pressure drop resulting in the formation of a blown-up structure by virtue of the expansion of a superheated liquid (in particular water), as understood by the skilled person. Likewise, 'popping' is a well-known form of puffing, as applied for example to popcorn, wherein pressure builds up inside the kernel's pericarp (hull) and the pressure drop is the result of a sudden burst of the hull.

### Composition comprising an oil phase

The present invention relates to a composition comprising an oil phase. In the context of the present invention, an oil phase is understood to be a phase whose principal components are hydrophobic substances of which typically a part is liquid at room temperature. For the avoidance of doubt, the below explanation, exemplification and preferences regarding oil compositions applies to the oil composition in any aspect of the present invention. Structuring and or rheological modification is particularly desirable for oil phases which - without the presence of a structurant such as for example hardstock fat and/or the particles of puffed maize endosperm of the present invention - would have been liquid at the temperature at which they are used. Thus, the oil phase comprises a liquid oil. The liquid oil preferably includes an edible liquid oil, a liquid paraffin, a liquid silicone oil or a combination thereof.

The composition of the invention preferably is an edible composition. The oil phase therefore preferably is an edible oil phase. Consequently, the liquid oil and hardstock fat preferably consist of edible oils and fats.

Thus, the liquid oil preferably is an edible triglyceride-based oil as understood by the person skilled in the art. Likewise, the hardstock fat preferably is an edible triglyceride-based fat. The terms 'triacylglycerols', 'TAGs', and 'triglycerides' are used interchangeably; they refer to esters of glycerol and three fatty acids. The fatty acid (moieties) of the TAGs may vary in length. The length of a fatty acid is commonly indicated by their carbon number. The fatty acid (moieties) may be saturated, monounsaturated or polyunsaturated. Examples of sources of conventional edible oils and fats include coconut oil, palm kernel oil, palm oil (and fractions thereof including palm olein and palm stearin), marine oils (including fish oil), lard, tallow fat, butter fat, soybean oil, safflower oil, cotton seed oil, rapeseed oil, linseed oil, sesame oil, poppy seed oil, corn oil (maize oil), sunflower oil, peanut oil, rice bran oil, olive oil, algae oil, shea fat, and alanblackia and blends thereof. For the purpose of this invention, algae oils are considered vegetable oils.

Preferably at least 50 wt% of the liquid oil (based on total amount of liquid oil) is of vegetable origin, more preferably at least 60 wt%, even more preferably at least 70 wt%, still more preferably at least 80 wt%, even still more preferably at least 90 wt% and even still more further preferably at least 95 wt%. Most preferably the liquid oil essentially consists of oil of vegetable origin. Preferably the liquid oil is selected from soybean oil, sunflower oil, rape seed (canola) oil, cotton seed oil, peanut oil, rice bran oil, safflower oil, palm olein, linseed oil, fish oil, high omega-3 oil derived from algae, corn oil (maize oil), sesame oil, palm kernel oil, coconut oil, olive oil, and combinations thereof. More preferably the liquid oil is selected from soybean oil, sunflower oil, rape seed oil, corn oil (maize oil), olive oil, linseed oil, palm olein and combinations thereof.

Alternatively, it may also be preferred that the liquid oil is an edible diglyceride-based oil, or it is an oil based on a mixture of edible triglycerides and edible diglycerides. The present invention is not limited to edible compositions. In particular in the context of personal care compositions, the oil phase may also include one or more paraffins, or silicone oils.

The oil phase of the composition according to the present invention preferably comprises at least 1wt%, more preferably at least 10 wt%, still more preferably at least 50 wt%, yet more preferably at least 80 wt%, still more preferably at least 85 wt% and even still more preferably at least 90 wt% of liquid oil with respect to the weight of the oil phase. In some applications, it is even preferred that at least 95 wt% or more preferably at least 98 wt% of liquid oil with respect to the weight of the oil phase. Thus, the oil phase preferably comprises between 1 and 99 wt-%, more preferably between 10 and 98 wt-%, even more preferably between 50 and 95 wt-% and still more preferably between 80 and 98.0 wt-% of liquid oil with respect to the weight of the oil phase.

### Hardstock fat

The hardstock fat in the oil phase can be any hardstock fat that is suitable to structure oil phases. Suitable hardstock fats are well known to the skilled person. Such hardstock fats may for example include vegetable fats, animal fats, and the like. The hardstock fat preferably is edible.

Vegetable fats are preferred over animal fats because their unsaturated fat composition enhances the spread's nutritional value. Besides that, vegetable fats are a relatively cheap resource. However, natural, non-processed vegetable fats which have hardstock functionality are rare. Natural fats in the context of this specification are fats which as such are present in their non-genetically modified source organism, particularly in the seeds or fruits of particular plants. For acting as hardstock fat such non-processed vegetable fats usually lack the necessary high content of saturated fatty acids with a chain length of at least 16 carbon atoms. Shea fat, cocoa butter and palm oil are a few examples of fats containing a substantial amount of saturated fatty acid.

Fractionation, hydrogenating and interesterification are well known techniques for turning vegetable oils into suitable hardstock fats. The present trend in food processing, however, is to avoid processing, as much as possible and to opt for natural ingredients and natural processing. Natural processing means that the ingredients have a natural origin and after harvesting have been subjected to no other treatment than a refining and/or purification treatment and to no modification treatment whatsoever.

More natural processing appeals to manufacturers, as it may lower the cost of the production process and the required number of processing steps.

Therefore, it is preferred that the hardstock fat is obtained from palm oil, cocoa butter, coconut oil, shea fat, allanblackia fat or high stearic sunflower oil, or blends thereof. More preferably the hardstock fat is obtained from coconut, shea, alanblackia, high stearic sunflower oil or blends thereof.

Trans unsaturated fatty acids are known to have a good structuring capacity but are not preferred as they are associated with cardiovascular disease. Therefore, preferably the fat phase comprises less than 5 wt%, more preferably less than 3 wt% and even more preferably less than 1 wt% trans unsaturated fatty acid. Trans unsaturated fatty acids are naturally present mainly in fats of animal origin like for example butter fat and butter oil. Partial hydrogenation of liquid vegetable oils may also lead to the presence of trans unsaturated fatty acids. Therefore, the fat blend preferably does not contain partially hydrogenated fats.

To maintain a healthy composition the oil phase preferably comprises less than 30 wt% saturated fatty acids and preferably less than 20 wt%, like for example 10 to 35 wt%, 15 to 35 wt% or 15 to 30 wt%. Preferably the fat phase comprises at least 40 wt% of poly unsaturated fatty acids.

The liquid oil may be a single oil or a mixture of two or more oils. Likewise the hardstock fat may be a single fat or a mixture of two or more fats. The liquid oil and hardstock fat may be of vegetable, dairy (e.g. dairy fat or butter oil) or marine (e.g. algae oil or fish oil) origin.

Preferably at least 50 wt% of the hardstock fat (based on total amount of structuring fat) is of vegetable origin, more preferably at least 60 wt%, even more preferably at least 70 wt%, still more preferably at least 80 wt%, even still more preferably at least 90 wt% and even still more further preferably at least 95 wt%. Most preferably the hardstock fat essentially consists of fat of vegetable origin.

Preferably at least 50 wt% of the combined amount of liquid oil and hardstock fat total fat blend is of vegetable origin, more preferably at least 60 wt%, even more preferably at least 70 wt%, still more preferably at least 80 wt%, even still more preferably at least 90 wt% and even still more further preferably at least 95 wt%. Most preferably the combined amount of liquid oil and hardstock fat essentially consists of fat of vegetable origin.

The oil phase of the composition according to the present invention preferably comprises at least 1wt%, more preferably at least 10 wt%, still more preferably at least 50 wt%, yet more preferably at least 80 wt%, still more preferably at least 85 wt% and even still more preferably at least 90 wt% of liquid oil with respect to the weight of the oil phase. In some applications, it is even preferred that at least 95 wt% or more preferably at least 98 wt% of liquid oil with respect to the weight of the oil phase. Thus, the oil phase preferably comprises between 1 and 99 wt-%, more preferably between 10 and 98 wt-%, even more preferably between 50 and 95 wt-% and still more preferably between 80 and 98.0 wt-% of liquid oil with respect to the weight of the oil phase.

The oil phase comprises at least 1 wt%, preferably at least 2 wt%, more preferably at least 3 wt%, even more preferably at least 4 wt%, and still more preferably at least 5 wt% of hardstock fat with regard to the weight of the oil phase.

The oil phase comprises not more than 20 wt%, preferably not more than 18 wt%, more preferably not more than 15 wt%, even more preferably not more than 12 wt%, still more preferably not more than 10wt% and yet more preferably not more than 8 wt% of hardstock fat with regard to the weight of the oil phase.

The oil phase comprises from 1 to 20 wt-% of hardstock fat with regard to the weight of the oil phase. Preferably, the oil phase comprises between 2 wt% and 18 wt%, more preferably between 3 wt% and 15 wt%, more preferably between 4 wt% and 12 wt% and even more preferably between 5 wt% and 10 wt% of hardstock fat with respect to the weight of the oil phase.

### Particles of puffed maize kernel endosperm

Maize (*Zea mays*) is a well-known crop species in the Poaceae family. Maize is cultivated around the world. The fruits or maize cobs contain the seeds of the maize, known as maize kernels. Maize kernels have a typical shape and structure, which typically includes a germ, endosperm and pericarp. The endosperm tissue of maize is particularly rich in starches, typically amylase and amylopectin. In addition, it has a relatively high fibre content. The pericarp (hull) of maize kernels is relatively strong and water-impermeable.

The general process of puffing of maize endosperm and the typical structure resulting therefrom are well-known in the art. One of the most well-known ways of puffing maize endosperm is by popping popcorn. Such popping is an (almost) explosive form of puffing, in which the hull bursts open upon heating. The applied heat during the popping process causes steam formation inside the kernel. The steam causes at least part of the starch to gelatinise and gradually builds up a pressure that finally leads to a sudden rupture of the endosperm cells and the hull. The resulting sudden pressure drop and the evaporation of water causes the starch and the proteins to form a crunchy foam. It is generally known that it is the combination of endosperm and pericarp properties of maize and the right humidity that make maize kernels puffable and or poppable. In general any conventional way of popping maize is suitable. Popping may for instance be carried out by microwave heating or hot air heating. Alternatively, extrusion-based popping of maize kernels is also known. Here, kernels or a slurry of endosperm material is compressed, and optionally heated, though often the heating due to friction only suffices. When the heated material leaves the nozzle the popping takes place.

In general, the kernels of many maize cultivars are suitable to be popped or puffed. The structure that is obtained by popping popcorn is especially desirable for the particles used in the present invention. Therefore, the puffed maize kernel endosperm is preferably obtained from puffed popcorn, more preferably from popped popcorn. Certain maize cultivars have been specifically bred for their suitability to be popped, including for instance *Zea mays var. everta.* Therefore, the popcorn is preferably sourced from Zea *mays var. everta.*

As an alternative to popping of whole maize kernels, maize endosperm material may also be puffed by extrusion processes. These processes are well-known to the skilled person and may be readily optimised to yield the structure that is desired for the particles of puffed maize kernel endosperm used in the present invention. It is preferred that such structure is popcorn-like as understood by the skilled person.

### Particles

The present invention requires the puffed endosperm material to be in a particulate form, at least in the final format of the composition of the invention. Therefore, a size reduction is often need after the puffing process. This is typically the case after popping of popcorn. Such size reduction may be carried out by any conventional means, including for example milling, cutting, and grinding. If for example popped popcorn is comminuted, the resulting mixture of particles may include germ, endosperm and pericarp, but most of the volume and weight will usually be constituted by the expanded endosperm.

Comminution may be carried out on the dry puffed endosperm material, but at least part of such a comminution process may also be carried out whilst the material is dispersed in a suitable liquid. Such a suitable liquid should preferably be a liquid that leaves the internal expanded structure of the puffed material intact. Such wet comminution may for instance be carried out in the oil phase that is to be structured, or in at least part of the oil phase.

Depending on the comminution method, it may be desirable to fractionate the ground material, in order to obtain a particulate material with a suitable size distribution. Such fractionation is conveniently carried out by sieving, which is a well-known technique.

The particle size distribution of the particles of puffed endosperm material used in the present invention can also conveniently be analysed by sieving. It is preferred that such analysis is carried out following the sieving method described in the Examples section below. The sieving (in order to establish the size distribution of the particles) may be carried out on the dry particles, but may also be carried out on a relatively dilute dispersion of the particles in a hydrophobic medium, such as for instance a liquid triglyceride oil.

The particles of puffed maize kernel endosperm used in the present invention are such that upon sieving at least 80 wt% of said particles passes a sieve with apertures of 500 µm. If too many of the particles in a composition of the invention are too large they are likely to lead to poor and/or inefficient structuring, a grainy/gritty mouthfeel upon consumption, and flotation-like defects upon storage of the composition. Therefore the size of the particles of puffed maize kernel endosperm is preferably such that upon sieving at least 80 wt% of said particles passes a sieve with apertures of 400 µm.

It is also believed that if too many of the particles are too small, the structuring efficiency of the particles is reduced to a certain extent. Therefore, the size of the particles of puffed maize kernel endosperm is preferably also such that upon sieving not more than 35 wt% of said particles passes a sieve with apertures of 50 µm, and more preferably such that not more than 35 wt% of said particles passes a sieve with apertures of 100 µm. It is even more preferred that the size of the particles of puffed maize kernel endosperm is such that upon sieving at least 85 wt%, more preferably at least 90 wt%, and even more preferably at least 95 wt% of said particles passes a sieve with apertures of 400 µm. Likewise it is also preferred that not more than 30 wt%, even more preferably not more than 25 wt% and still more preferably not more than 20 wt% of said particles passes a sieve with apertures of 100 µm.

Thus, it is preferred that the sizes of the particles of puffed maize kernel endosperm are such that upon sieving at least 95 wt% of said particles passes a sieve with apertures of 400 µm and not more than 20 wt% of said particles passes a sieve with apertures of 100 µm.

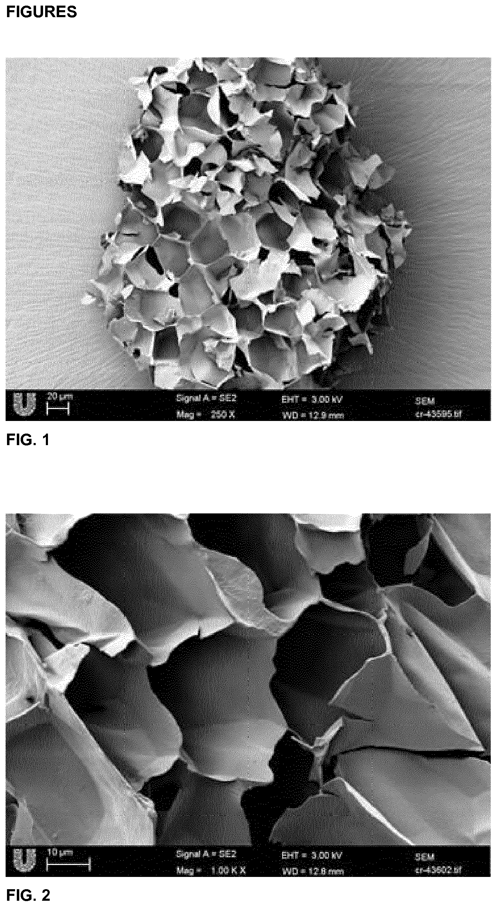

It is hypothesized that the effective structuring by the particles used in the present invention is at least in part due to the particular foam structure that is imparted to the endosperm material by puffing, especially popping. Popping produces everted grains consisting of expanded maize endosperm foam. It is believed that each bubble of the foam is formed from an individual starch granule. Figures 1 and 2 show the foam structure that was obtained upon popping of popcorn. This inflated open structure includes bubble-shaped pores, some of which may be open and some of which may be closed and/or intact (after comminution).

Therefore, the puffed maize kernel endosperm in the particles used in the present invention, preferably has a solid foam structure, more preferably, a foam structure that is similar to that of popped popcorn and even more preferably a cellular structure that is obtainable by popping popcorn sourced from *Zea mays var. everta.*

The oil phase in the composition according to the invention comprises at least 0.5 wt%, preferably at least 1 wt%, more preferably at least 2 wt%, even more preferably at least 3 wt%, still more preferably at least 4 wt%, yet more preferably at least 5 wt% and even still more preferably at least 8 wt% and still more preferably at least 10 wt% of said particles with respect to the weight of the oil phase.

The oil phase in the composition according to the invention comprises at most 20 wt%, preferably at most 19 wt%, more preferably at most 18 wt%, even more preferably at most 16 wt%, still more preferably at most 14 wt% and even still more preferably at most 13 wt% and still more preferably at most 12 wt% of said particles with respect to the weight of the oil phase.

Thus, the composition according to the invention comprises between 0.5 and 20 wt% of said particles with respect to the weight of the oil phase. Preferably, the composition according the invention comprises between 3 and 18 wt%, more preferably between 4 and 16 wt%, even more preferably between 8 and 14 wt%, and even more preferably between 10 and 12 wt% of said particles with respect to the weight of the oil phase.

### Combining fibrous preparation and hardstock fat

According to the invention, a combination of hardstock fat and particles of puffed maize kernel endosperm is surprisingly used to modify the rheological properties of an oil phase, such that the oil phase of the composition according to the invention is a structured oil phase. It is clear to the skilled person that the amount of the particles of puffed maize kernel endosperm and the amount of hardstock fat that are used in the oil phase depend on the particular application and the desirable extent of rheological modification or structuring. A composition may also comprise other components which contribute to the overall rheological properties and/or structuring.

Without wishing to be bound by theory, it is believed that the enhanced structuring capability of the particles of puffed maize kernel endosperm in combination with the hardstock fat is due to their capacity to jointly build a space-filling (percolating) network with a large degree of openness within the oil phase. Thus, the combination of particles of puffed maize kernel endosperm and hardstock fat also plays an important role in imparting structural characteristics such as a semi-solid, plastic or spreadable consistency. Surprisingly, the fibrous material does not precipitate, aggregate, flocculate or collapse in the hydrophobic oil phase and even more surprisingly, the particles of puffed maize kernel endosperm and the hardstock fat interact synergistically to yield very efficient structuring of the oil phase. Therefore, the oil phase preferably comprises a synergistic combination of the hardstock fat and the particles of puffed maize kernel endosperm.

In such a synergistic combination the hardstock and the particles of puffed maize kernel endosperm are present in respective amounts that yield a synergistic structuring effect. The exact amounts depend on the type and amount of liquid oil, the type of hardstock fat and the type of particles of puffed maize kernel endosperm. Maize kernels are a natural product. Therefore, the amount of particles required to obtain a desired degree of structuring will generally vary between different types of particles. The amount needed of a specific particle material in a specific oil phase can however be readily optimised by the skilled person. Besides, with higher amounts of particles of puffed maize kernel endosperm, relatively less hardstock will be required and vice versa.

In view of the favourable interaction, it is preferred that during preparation of the composition of the invention, the hardstock fat is crystallised in the presence of the dispersed particles of puffed maize kernel endosperm.

The oil phase of the composition according to the invention comprises from 1 to 20 wt-% of said hardstock fat and from 0.5 to 20 wt-% of the particles of puffed maize kernel endosperm with regard to the weight of the oil phase.

Preferably, the oil phase of the composition according to the invention comprises from 2 to 8 wt-% of said hardstock fat and from 4 to 14 wt-% of the particles of puffed maize kernel endosperm with regard to the weight of the oil phase.

The ratio of hardstock fat to particles of puffed maize kernel endosperm may also affect the structuring they impart to the oil phase. Therefore, the hard stock fat and the particles of puffed maize kernel endosperm are preferably present in a ratio by weight of hardstock fat to particles of puffed maize kernel endosperm of between 1 to 20 and 40 to 1. More preferably, they are present in a ratio by weight of hardstock fat to particles of puffed maize kernel endosperm of between 1 to 10 and 10 to 1, and even more preferably of between 1 to 7 and 2 to 1.

Alternatively, the oil phase preferably comprises the particles of puffed maize endosperm in an amount which provides the composition with a Stevens value of at least 10, more preferably at least 30, even more preferably at least 50 and still more preferably at least 70. Here the Stevens value is determined as specified in the Examples section. Both the possibility that substantially only the particles of puffed maize endosperm contribute to the Stevens value of the composition and the possibility that other components of the composition also make a contribution to the Stevens value of the composition are envisaged.

It was surprisingly found that the combined effect of the particles of puffed maize kernel endosperm and the hardstock fat can render the composition of the invention non-flowable. Thus, the composition preferably is a non-flowable composition. A composition is considered non-flowable if a sample of the composition is placed in a jar and no flow is observed upon turning the jar upside down.

The benefits of structuring the oil phase of the composition according to the present invention may advantageously also be exploited to structure or rheologically modify the oil phase of compositions that also comprise optional additional components or additional phases. However, the composition may also be a composition which essentially consists of the oil phase with the particles of puffed maize kernel endosperm dispersed therein.

Thus, it is preferred that the composition comprises at least 5wt%, more preferably at least 10wt%, even more preferably at least 50 wt%, even more preferably at least 70 wt-%, even more preferably at least 80 wt% and still more preferably at least 90 wt% of the oil phase with respect to the weight of the composition.

In view of the above it is particularly preferred that the composition of the present invention is an edible composition, which comprises a structured oil phase comprising a liquid oil, from 1 to 20 wt% with respect to the weight of the oil phase of hardstock fat, and from 0.5 to 20 wt% with respect to the weight of the oil phase of particles of puffed maize kernel endosperm, dispersed in said oil phase, wherein the particles of puffed maize kernel endosperm upon sieving at least 95 wt% of said particles passes a sieve with apertures of 400 µm and not more than 20 wt% of said particles passes a sieve with apertures of 100 µm, and wherein the puffed maize kernel endosperm is obtained from puffed popcorn.

### Emulsions

It was surprisingly found that the network formed by the particles of puffed maize kernel endosperm and the crystallised hardstock is capable of stabilising droplets of another phase and for example reduce or prevent their tendency to coalesce, in particular in case of an aqueous phase dispersed in the oil phase. Therefore, in some embodiments, the composition is preferably in the form of an emulsion. For instance, the composition of the invention can advantageously be an edible spread. Such spreads are often oil-continuous. Therefore, the composition of the invention is preferably in the form of a water-in-oil emulsion.

More preferably, the composition of the invention is in the form of a water-in-oil emulsion comprising
a. from 5 to 75 wt% of an aqueous phase; and
b. from 25 to 95 wt% of the oil phase.

Even more preferably such a water-in-oil emulsion comprises from 5 to 50 wt% of an aqueous phase and from 50 to 95 wt% of the oil phase. Still more preferably such a water-in-oil emulsion comprises from 10 to 35 wt% of an aqueous phase and from 90 to 65 wt% of the oil phase.

### Method

According to the second aspect, the present invention also provides a method for the preparation of a composition comprising a structured oil phase, wherein the method comprises the steps as specified hereinabove. The method preferably is a method for the preparation of a composition according to the invention. Therefore, the examples and preferences with regard to the cell wall material, the particles of puffed maize kernel endosperm, the oil phase, the liquid oil, the hardstock fat and any of the other components of the composition according to the invention also apply with regard to this method and the composition prepared by it.

Preferably step (a) includes puffing popcorn and grinding the puffed popcorn.

Step d involves preparing a molten mixture of the hardstock fat and the at least first part of the liquid oil. Such a molten mixture is typically prepared by heating in any suitable way. The hardstock fat may for example be individually heated until molten, or the hardstock fat and liquid oil may for instance first be combined and then heated.

Step e involves dispersing the particles of puffed maize kernel endosperm in said molten mixture. Typically, such dispersion involves only very little agitation, mild agitation, mild shear. Under many practical conditions, mild stirring suffices to generate structured structure upon combining the fibrous preparation and the oil phase.

The particles of puffed maize kernel endosperm may be ground before they are dispersed in the molten mixture. Alternatively, or even additionally, a size reduction step may also be carried out after the fibrous preparation was dispersed (at a relatively course size) in the molten mixture. In particular a relatively mild shear treatment of a dispersion of the particles of puffed maize kernel endosperm in at least part of the oil phase may advantageously lead to an increase in the structuring capability of the preparation.

Step f involves crystallising the hardstock fat in the mixture comprising the dispersed particles of puffed maize kernel endosperm. In this step the structuring network of particles of puffed maize kernel endosperm and hardstock crystals is typically formed. Such crystallisation is usually conducted in a process that involves apparatus that allow heating, cooling and mechanical working of the ingredients, such as the churn process or the votator process. The churn process and the votator process are described in the Ullmans Encyclopedia, Fifth Edition, Volume A 16, pages 156-158.

In case the composition to be formed is in the form of a water-in-oil emulsion, the composition may advantageously be prepared by a split stream process, in which in one sub-process the aqueous phase is dispersed in a continuous oil phase, while in another sub-process the structuring network of particles of maize kernel endosperm and hardstock is formed. An advantage of such a split stream process is that direct contact between bulk water and the particles is avoided. Therefore, in case the composition to be formed is in the form of a water-in-oil emulsion, the method preferably also includes the steps of
a. providing an aqueous phase
b. providing a second part of the liquid oil
c. preparing an emulsion of the aqueous phase in said second part of the liquid oil; and
d. combining the emulsion with the mixture comprising the crystallised hardstock fat and the particles.

The invention also relates to a composition obtainable by the method according to the invention.

### Use

### Use according to the invention

In a fourth aspect, the invention also relates to use of a synergistic combination of hardstock fat and particles of puffed maize kernel endosperm as defined hereinbefore. The examples and preferences with regard to the particles of puffed maize kernel endosperm, the oil phase, the liquid oil, the hardstock fat and any of the other components of the composition according to the invention also apply with regard to this use according to the invention.

### EXAMPLES

The invention can be better understood by virtue of the following non-limiting examples.

### Example 1: Liquid oils structured with puffed maize endosperm and hardstock fat

An example composition according to the invention (Example 1) was prepared and compared with Comparative Examples structured with hardstock only (A), or with puffed maize endosperm only (B). See for compositions Table 1.

### Preparation of structuring ingredient: puffed maize endosperm

Microwaveable popcorn ('Popcorn microwave zout', Albert Heijn, Zaandam, The Netherlands) was puffed in a microwave oven for 3 min at 1000Watt. The puffed kernels were allowed to cool down in a beaker. This was followed by grinding the puffed kernels in a Kenwood Classic Chef orbital mixer with blender attachment for 5 minutes at preset 5. The resulting powder was then passed in 30g aliquots through a stack of stainless steel sieves (apertures 2.0mm, 700 µm, and 500 µm respectively), using a vibratory sieve shaker (type AS200 digit, Retsch Gmbh & Co., Haan, Germany) pre-set at 60Hz for 5 minutes. The powder fractions passing the last sieve were collected and stored in an airtight container until use.

### Scanning Electron Microscopy characterization of sample microstructure.

The samples were prepared as follows: An amount of the particles of puffed maize endosperm was put on a Gatan sample holder with conductive double sided sticky tape. The excess of particles were removed by gently holding the holder upside-down. Subsequently, the holder containing particles was transferred into a Gatan 2500 transfer system which was kept at -45°C. The particles were coated with platinum for 2 times at 180 sec to prevent charging during observation in the microscope. Finally, the particles were transferred into a Zeiss Auriga field emission SEM (-45°C) and imaged at 3 kV.

An example of a particle of puffed and grinded maize endosperm is shown in the micrograph of Figure 1. The scale bar corresponds to 20 µm. A close-up of the same particle is shown in the micrograph of Figure 2, in which the scale bar corresponds to 10 µm. Both micrographs show the structure that is typical of puffed popcorn. Figures 1 and 2 show the polygonal structure of the inflated starch granules constituting the foam-like structure of the popped maize. The open foam bubbles at the outside of the particle are believed to have been caused by the grinding process.

### Preparation of Comparative Example A

4 grams of erES 48 hardstock (erES48 is an enzymatically interesterified mixture of 65% multi fractionated palm oil stearin (with an iodine value of 14) and a 35% palm kernel oil, Unimills B.V., The Netherlands) was added to 96 grams sunflower oil (fully refined and winterized sunflower (SF) oil, ex Unilever Rotterdam) in a plastic beaker and heated in a microwave to 80°C. The melt was mixed with a spoon and 80 grams were transferred into a round plastic jar (diameter = 52 mm, volume ca. 100 ml) and left to cool in the fridge at 5°C.

### Preparation of Comparative Example B

12 grams of puffed maize endosperm was manually dispersed in 88 grams sunflower-oil until a thick paste was obtained. The product was transferred in a round plastic jar (diameter = 52 mm, volume ca. 100 ml) and then stored at 5°C.

### Preparation of Example 1

8 grams of erES 48 hardstock was added to 168 grams of sunflower-oil in a plastic beaker and heated in the microwave to 80°C. 167.2 grams of this hot melt was transferred into a stainless steel bowl and 22.8 grams of the puffed maize seed powder was manually dispersed into the mixture. The bowl was then placed in ice water and the product was cooled to an end temp of 10°C, under continuous manual mixing with a spoon. The product was transferred inround plastic jars in 80 gram aliquots (diameter = 52 mm, volume ca. 100 ml) and then stored at 5°C.

**Table 1: Composition of Comparative Examples A and B and Example 1**

| | | **Examples (wt%)** | | |
|---|---|---|---|---|
| **Ingredients** | | **A** | **B** | **1** |
| Puffed & ground maize endosperm | | | 12 | 12 |
| Fat phase | Hardstock erES 48 | 4 | | 4 |
| | Sunflower oil | 96 | 88 | 84 |
| Total | | 100 | 100 | 100 |

### Characterization of structured oil samples

Texture analysis was performed using a Brookfield Texture Analyzer LFRA equipped with a cylindrical probe (probe diameter = 0.25 inch/6.35 mm; probe speed = 2 mm/s; maximum deformation = 25 mm) and final load was recorded in grams (known as Stevens value). The samples (80 gram) were contained in round plastic jars (diameter = 52 mm, volume ca. 100 ml). Measurements were performed in triplicate after storing the samples for 2 days at 5 °C and measurement temperature was 5 °C. The results of the texture analysis tests are summarized in Table 2.

### Texture analysis results

The Stevens value of sunflower oil structured with 4-wt% hardstock (Comparative Example A) was below the detection limit of the analyser because the composition was still liquid. Sunflower oil structured with 12-wt% of the puffed maize endosperm (Comparative Example B) did not flow anymore and a Stevens value could be obtained. Surprisingly, Example 1 demonstrates that there was a synergistic effect when the oil phase was structured with a combination of hardstock fat and particles of puffed maize endosperm. For Example 1, with 4-wt% hardstock plus 12-Wt% puffed maize endosperm, the Stevens value was more than double the value of the sum of the additive Stevens values of Comparative Examples A and B.

**Table 2: Texture analysis of Examples**

| **Examples** | **Stevens (g ± SD, n = 3))** |
|---|---|
| A | BDL |
| B | 36.3 ± 0.6 |
| 1 | 74.0 ± 5.0 |

| | |
|---|---|
| BDL = below detection limit | |

### Example 2: W/O spread

A split stream process was used to make a spread in the form of a water-in-oil (W/O) emulsion with a structured oil phase. First, an emulsion (composition A) and a structured oil composition (composition B) were prepared separately. Then, A and B were combined at a 1 to 1 ratio to obtain the final product. The compositions of A and B and of the final product are shown in Table 3.

### Composition A: Preparing a W/O emulsion

Potassium sorbate (0.1 wt%) was mixed with water until dissolved and set at pH 4.8 with citric acid. A commercial cooking liquid (PHASE, supplied by Unilever Food Solution, composition (per 100 g): 87.87 g RP oil (rapeseed oil), 3.00 g RPh70 (hydrogenated rapeseed oil with a melting point of 70°C), 0.30 g citrem (GRINDSTED® CITREM citric acid ester surfactant, Danisco), 0.03 g beta-carotene, 0.8 g salt, 8.0 g butter olein) was added to a beaker and the prepared water phase was slowly added while shearing the mixture with an overhead mixer (Silverson L4RT-A, Silverson, MA, USA) at 7000 rpm for 4 minutes using the fine emulsor screen (1 mm round holes). The resulting emulsion was stored at 5°C until use.

### Composition B: Preparing the structured oil phase

erES 48 hardstock and sunflower oil were mixed in a plastic beaker.and heated to 80°C in a microwave oven The hot oil blend was transferred into a stainless steel bowl and an amount of the particles of puffed maize kernel endosperm (prepared as described in Example 1) was manually dispersed into the hot (oil + hardstock) mixture. The bowl was placed in ice-water and under continuous mixing of the content and scraping it off the wall of the bowl with a spoon, the content of the bowl was cooled to 10°C and stored in a fridge at 5°C.

### Combining compositions A & B

Compositions A & B were manually mixed with a spoon, in a stainless steel bowl placed in ice-water, until a homogenous mixture was obtained. The total added hardstock in the final composition was 4.75 wt-% (3.85wt-% erES48 and 0.9wt-% RPh70 from PHASE). The resulting structured spread was stored in plastic containers in the fridge at 5°C to harden. Typically, Stevens value after one week storage was 44.8 ± 1.9 gram. The spread had a smooth appearance and mouthfeel, sticked to the knife, and was spreadable.

**Table 3: Ingredients in composition A & B and final product (spread)**

| | **Concentration ingredients (wt-%)** | | |
|---|---|---|---|
| **Ingredients** | **Composition A** | **Composition B** | **Final composition (A + B at 1:1 ratio)** |
| water (pH = 4.8) | 39.9 | | 19.95 |
| Phase | 60 | | 30.00 |
| ERES 48 | | 7.7 | 3.85 |
| SF-oil | | 77 | 38.50 |
| Puffed maize | | 15.3 | 7.65 |
| K-sorbate | 0.1 | | 0.05 |

### Example 3: Synergistic effects of ground puffed maize endosperm plus added hardstock on degree of oil structuring.

In this example the oil structuring performance of puffed and ground maize endosperm, added hardstock and the combination of both were determined to demonstrate the synergistic effect on structuring by the combined ingredients.

Preparation of the puffed and ground maize endosperm structured oil samples: puffed and ground maize endosperm - prepared as described above - was manually dispersed in sunflower oil (fully winterized and refined, ex Unilever Rotterdam) using a spatula at concentrations as mentioned in table 4. The beaker was placed in ice water and the mixture cooled to 10°C while mixing with the metal spatula. The products were transferred to a round plastic container (diameter = 52 mm, volume ca. 100 ml) and then stored at 5°C. Texture analysis (Stevens) of the samples was performed after storing the samples for 2 days at 5 °C and measurement temperature was 5 °C. The Stevens results are summarized in table 5.

Preparation of the erEs48 hardstock structured oil samples: sunflower oil was heated to 80°C and then erES48 (erES48 is an enzymatically interesterified mixture of 65% multi fractionated palm oil stearin (with an iodine value of 14) and a 35% palm kernel oil, Unimills B.V., The Netherlands) was dissolved with a spatula at concentration mentioned in table 4. The beaker was placed in ice water and the mixture cooled to 10°C while mixing with the metal spatula. The products were transferred to a round plastic container (diameter = 52 mm, volume ca. 100 ml) and then stored at 5°C. Texture analysis (Stevens) of the samples was performed after storing the samples for three weeks at 5 °C and measurement temperature was 5 °C. The Stevens results are summarized in table 5.

Preparation of the puffed and ground maize endosperm + erES48 hardstock structured oil samples: sunflower oil and erES48 hardstock were heated in a 200ml glass beaker to 80C. Then puffed and ground maize endosperm - prepared as described earlier - was added and dispersed with a metal spatula. The beaker was placed in ice water and the mixture cooled to 10°C while mixing with the metal spatula. The sample was then transferred in plastic container (diameter = 52 mm, volume ca. 100 ml) and placed in a 5°C fridge. After three weeks Stevens was measured (procedure described above) by directly analysing the sample from the 5 °C fridge. The concentration ranges of both the popcorn plus hardstock in sunflower oil and the resulting Stevens values are summarised as a matrix in table 6. After these measurements, all samples were stored at ambient conditions for one day and the flow properties of the samples were assessed placing the containers upside down. In this way it was possible to determine what popcorn and hardstock levels were required to stop sunflower oil from flowing in case the popcorn and hardstock fat as specified here were used.

**Table 4: Composition of oils with increasing amounts of puffed and ground maize endosperm only, or erES48 hardstock only**

| **Ingredients** | **Concentration ingredients (wt-%)** | | | | | | | | | | | |
|---|---|---|---|---|---|---|---|---|---|---|---|---|
| Sunflower oil | 99.0 | 98.0 | 97.0 | 96.0 | 95.0 | 94.0 | 93.0 | 92.0 | 91.0 | 90.0 | 89.0 | 88.0 |
| Puffed maize endosperm or erES48 hardstock | 1.0 | 2.0 | 3.0 | 4.0 | 5.0 | 6.0 | 7.0 | 8.0 | 9.0 | 10.0 | 11.0 | 12.0 |

**Table 5: Stevens values of sunflower oil samples structured with increasing amounts of puffed ground maize endosperm only, or structured with erEs48 hardstock only**

| | **Stevens (g ± SD, n=3, temp = 5 ° C)** | |
|---|---|---|
| **% ingredient in SF-oil** | **Puffed ground maize endosperm in SF-oil** | **erES48 in SF-oil** |
| 1 | 0 | 0 |
| 2 | 0 | 0 |
| 3 | 0 | 0 |
| 4 | 0 | 0 |
| 5 | 0 | 0 |
| 6 | 2.3 ± 0.6 | 1.2 ± 0.6 |
| 7 | 3.7 ± 0.6 | 1.7 ± 0.6 |
| 8 | 4.3 ± 0.6 | 2.3 ± 0.6 |
| 9 | 7.0 ± 1.0 | 3.7 ± 0.6 |
| 10 | 9.7 + 1.2 | 7.3 + 0.6 |
| 11 | 22.0 ± 2.6 | 12.7 ± 2.1 |
| 12 | 36.6 ± 0.6 | 18.0 ± 1.0 |

**Table 6: Measured Stevens values of sunflower oil samples structured with different amounts of puffed ground maize endosperm plus erEs48 hardstock**

| **Puffed ground maize endosperm in SF-oil (%)** | **Measured Stevens values of puffed ground maize endosperm + erES48 hardstock in Sunflower oil (g, n=3, temp = 5°C)** | | | | | | | | | |
|---|---|---|---|---|---|---|---|---|---|---|
| ***12*** | 58.8 | 81.0 | 102.4 | 123.0 | 142.9 | 162.0 | 170.4 | 198.0 | 214.9 | 231.0 |
| ***11*** | 41.2 | 61.5 | 81.1 | 100.0 | 118.1 | 135.4 | 151.9 | 167.4 | 182.8 | 197.1 |
| ***10*** | 26.2 | 44.8 | 62.6 | 79.6 | 95.9 | 111.4 | 126.1 | 140.1 | 153.4 | 165.8 |
| ***9*** | 13.9 | 30.6 | 46.6 | 61.8 | 76.3 | 90.9 | 103.0 | 115.2 | 126.6 | 137.3 |
| ***8*** | 4.2 | 19.2 | 33.0 | 46.8 | 59.4 | 71.3 | 82.5 | 93.8 | 102.5 | 111.3 |
| ***7*** | 0.0 | 10.4 | 21.4 | 34.3 | 45.2 | 55.3 | 64.6 | 73.2 | 81.0 | 88.1 |
| ***6*** | 0.0 | 4.2 | 14.7 | 24.5 | 33.6 | 41.9 | 49.4 | 56.2 | 62.2 | 67.4 |
| ***5*** | 0.0 | 0.7 | 9.4 | 17.4 | 24.6 | 31.1 | 36.8 | 41.8 | 46.0 | 49.5 |
| ***4*** | 0.0 | 0.0 | 6.7 | 12.9 | 18.4 | 23.0 | 26.9 | 30.1 | 32.5 | 34.1 |
| | ***1*** | ***2*** | ***3*** | ***4*** | ***5*** | ***6*** | ***7*** | ***8*** | ***9*** | ***10*** |
| | **Amount of erES48 in sunflower oil (%)** | | | | | | | | | |

Table 5 shows that increasing the concentration of puffed maize endosperm or erES48 hardstock in sunflower oil resulted in an increase in product texture, apart from lower concentrations. However, when combining the puffed ground maize endosperm with erES48 hardstock in sunflower oil, much higher Stevens values could be obtained as shown in table 6. For example, table 5 shows that 10 wt% of the puffed ground maize endosperm yields a Stevens value of 9.7 g, and 3 wt% of erES48 does not give rise to a measurable Stevens value. In contrast, the combination of puffed ground endosperm and erES48 in these amounts, yielded a Stevens value of 62.6 g. Therefore, the combined effect was much more than the additive Stevens values of both individual compounds in sunflower oil. Likewise, 5 wt% of puffed maize endosperm did not yield a measurable Stevens value, and 10 wt-% of erES48 gave a Stevens value of 7.3 g. Again, the combination of the ingredients in the same amounts gave a Stevens value of 49.5 g. Thus,it can be concluded that there is a synergistic effect of the combination of puffed ground maize endosperm and erEs48 hardstock on structuring of sunflower oil. The flow assessment of sunflower oil structured with both puffed ground maize endosperm plus erEs48 hardstock revealed that samples displaying a Stevens value of 50 g or higher (measured as indicated) did not flow at ambient conditions.

## Claims

1. Composition comprising a structured oil phase, wherein the oil phase comprises
a. liquid oil;
b. from 1 to 20 wt-% of hardstock fat with regard to the weight of the oil phase; and
c. from 0.5 to 20 wt-% with regard to the weight of the oil phase of particles of puffed maize kernel endosperm, dispersed in said oil phase, wherein upon sieving at least 80 wt% of said particles passes a sieve with apertures of 500 µm

2. Composition according to claim 1 wherein the oil phases comprise a synergistic combination of the hardstock fat and the particles of puffed maize kernel endosperm.

3. Composition according to claim 1 or 2, wherein upon sieving at least 80 wt% of said particles passes a sieve with apertures of 400 µm.

4. Composition according to any one of claims 1 to 3, wherein not more than 35 wt% of said particles passes a sieve with apertures of 50 µm, and wherein preferably not more than 35 wt% of said particles passes a sieve with apertures of 100 µm.

5. Composition according to any one of claims 1 to 4, wherein for the particles of puffed maize kernel endosperm upon sieving at least 95 wt% of said particles passes a sieve with apertures of 400 µm and not more than 20 wt% of said particles passes a sieve with apertures of 100 µm.

6. Composition according to claim 1 or 5, wherein the oil phase comprises from 2 to 8 wt-% of said hardstock fat and from 4 to 14 wt-% of said particles with regard to the weight of the oil phase.

7. Composition according to any one of claims 1 to 6, wherein the hard stock fat and the particles are present in a ratio by weight of hardstock fat to particles of between 1 to 20 and 20 to 1.

8. Composition according to any one of claims 1 to 7, wherein the composition is an edible composition.

9. Composition according to any one of claims 1 to 8, wherein the puffed maize kernel endosperm is obtained from puffed popcorn.

10. Composition according to claim 9, wherein the popcorn is sourced from *Zea mays var. everta.*

11. Composition according to any one of claims 1 to 10, wherein the puffed maize kernel endosperm has a cellular structure.

12. Composition according to any one of claims 1 to 11, in the form of a water-in-oil emulsion.

13. Method for the preparation of a composition according to any one of claims 1 to 12, wherein the method comprises the steps of
a. providing the particles of puffed maize kernel endosperm;
b. providing at least a first part of the liquid oil;
c. providing the hardstock fat;
d. preparing a molten mixture of the hardstock fat and the at least first part of the liquid oil
e. dispersing said particles in said molten mixture; and
f. crystallising the hardstock fat in the mixture comprising the dispersed particles.

14. Use of a synergistic combination of hardstock fat and particles of puffed maize kernel endosperm to structure the oil phase of a composition comprising an oil phase, wherein upon sieving at least 80 wt% of said particles passes a sieve with apertures of 500 µm; and wherein the oil phase comprises from 1 to 20 wt-% of said hardstock fat and from 0.5 to 20 wt-% of said particles with regard to the weight of the oil phase..

## Patentansprüche

1. Zusammensetzung, umfassend eine strukturierte Ölphase, wobei die Ölphase umfasst:
a. flüssiges Öl;
b. von 1 bis 20 Gew.-% Hardstockfett, in Bezug auf das Gewicht der Ölphase; und
c. von 0,5 bis 20 Gew.-%, in Bezug auf das Gewicht der Ölphase, Teilchen von Puffmaiskorn-Endosperm, dispergiert in der Ölphase, wobei beim Sieben mindestens 80 Gew.-% der Teilchen durch ein Sieb mit Öffnungen von 500 µm treten.

2. Zusammensetzung nach Anspruch 1, wobei die Ölphasen eine synergistische Kombination des Hardstockfetts und der Teilchen des Puffmaiskorn-Endosperms ist.

3. Zusammensetzung nach Anspruch 1 oder 2, wobei beim Sieben mindestens 80 Gew.-% der Teilchen durch ein Sieb mit Öffnungen von 400 µm treten.

4. Zusammensetzung nach irgendeinem der Ansprüche 1 bis 3, wobei nicht mehr als 35 Gew.-% der Teilchen durch ein Sieb mit Öffnungen von 50 µm treten und wobei vorzugsweise nicht mehr als 35 Gew.-% der Teilchen durch ein Sieb mit Öffnungen von 100 µm treten.

5. Zusammensetzung nach irgendeinem der Ansprüche 1 bis 4, wobei bei den Teilchen des Puffmaiskorn-Endosperms beim Sieben mindestens 95 Gew.-% der Teilchen durch ein Sieb mit Öffnungen von 400 µm und nicht mehr als 20 Gew.-% der Teilchen durch ein Sieb mit Öffnungen von 100 µm treten.

6. Zusammensetzung nach Anspruch 1 oder 5, wobei die Ölphase von 2 bis 8 Gew.-% Hardstockfett und von 4 bis 14 Gew.-% Teilchen, in Bezug auf das Gewicht der Ölphase, umfasst.

7. Zusammensetzung nach irgendeinem der Ansprüche 1 bis 6, wobei das Hardstockfett und die Teilchen in einem Gewichtsverhältnis von Hardstockfett zu Teilchen zwischen 1 bis 20 und 20 bis 1 vorliegen.

8. Zusammensetzung nach irgendeinem der Ansprüche 1 bis 7, wobei die Zusammensetzung eine essbare Zusammensetzung ist.

9. Zusammensetzung nach irgendeinem der Ansprüche 1 bis 8, wobei das Puffmaiskorn-Endosperm aus gepufftem Popcorn erhalten wird.

10. Zusammensetzung nach Anspruch 9, wobei das Popcorn von Zea mays var. everta gewonnen wird.

11. Zusammensetzung nach irgendeinem der Ansprüche 1 bis 10, wobei das Puffmaiskorn-Endosperm eine Zellstruktur aufweist.

12. Zusammensetzung nach irgendeinem der Ansprüche 1 bis 11 in der Form einer Wasser-in-ÖI-Emulsion.

13. Verfahren zur Herstellung einer Zusammensetzung nach irgendeinem der Ansprüche 1 bis 12, wobei das Verfahren die Schritte umfasst:
a. Bereitstellen der Teilchen von Puffmaiskorn-Endosperm;
b. Bereitstellen mindestens eines ersten Teils des flüssigen Öls;
c. Bereitstellen des Hardstockfetts;
d. Herstellen einer geschmolzenen Mischung des Hardstockfetts und des mindestens ersten Teils des flüssigen Öls;
e. Dispergieren der Teilchen in der geschmolzenen Mischung; und
f. Kristallisieren des Hardstockfetts in der Mischung, umfassend die dispergierten Teilchen.

14. Verwendung einer synergistischen Kombination von Hardstockfett und Teilchen von Puffmaiskorn-Endosperm, um die Ölphase einer Zusammensetzung zu strukturieren, umfassend eine Ölphase, wobei beim Sieben mindestens 80 Gew.-% der Teilchen durch ein Sieb mit Öffnungen von 500 µm treten und wobei die Ölphase von 1 bis 20 Gew.-% Hardstockfett und von 0,5 bis 20 Gew.-% Teilchen, in Bezug auf das Gewicht der Ölphase, umfasst.

## Revendications

1. Composition comprenant une phase d'huile structurée, dans laquelle la phase d'huile comprend
a. de l'huile liquide ;
b. de 1 à 20 % en masse de graisse solide par rapport à la masse de la phase d'huile ; et
c. de 0,5 à 20 % en masse par rapport à la masse de la phase d'huile de particules d'endosperme de grains de maïs soufflés, dispersées dans ladite phase d'huile, dans laquelle lors du tamisage au moins 80 % desdites particules passent un tamis avec des ouvertures de 500 µm.

2. Composition selon la revendication 1, dans laquelle les phases d'huile comprennent une combinaison synergique de la graisse solide et des particules d'endosperme de grains de maïs soufflés.

3. Composition selon la revendication 1 ou 2, dans laquelle lors du tamisage au moins 80 % en masse desdites particules passent un tamis avec des ouvertures de 400 µm.

4. Composition selon l'une quelconque des revendications 1 à 3, dans laquelle au plus 35 % en masse desdites particules passent un tamis avec des ouvertures de 50 µm, et dans laquelle de préférence au plus 35 % en masse desdites particules passent un tamis avec des ouvertures de 100 µm.

5. Composition selon l'une quelconque des revendications 1 à 4, dans laquelle pour les particules d'endosperme de grains de maïs soufflés lors du tamisage au moins 95 % en masse desdites particules passent un tamis avec des ouvertures de 400 µm et au plus 20 % en masse desdites particules passent un tamis avec des ouvertures de 100 µm.

6. Composition selon la revendication 1 ou 5, dans laquelle la phase d'huile comprend de 2 à 8 % en masse de ladite graisse solide et de 4 à 14 % en masse desdites particules par rapport à la masse de la phase d'huile.

7. Composition selon l'une quelconque des revendications 1 à 6, dans laquelle la graisse solide et les particules sont présentes dans un rapport en masse de graisse solide à particules compris entre de 1 à 20 et 20 à 1.

8. Composition selon l'une quelconque des revendications 1 à 7, dans laquelle la composition est une composition comestible.

9. Composition selon l'une quelconque des revendications 1 à 8, dans laquelle l'endosperme de grains de maïs soufflés est obtenu à partir de popcorn soufflé.

10. Composition selon la revendication 9, dans laquelle le popcorn provient de *Zea mays var. everta.*

11. Composition selon l'une quelconque des revendications 1 à 10, dans laquelle l'endosperme de grains de maïs soufflés présente une structure cellulaire.

12. Composition selon l'une quelconque des revendications 1 à 11, dans la forme d'une émulsion eau-dans-huile.

13. Procédé pour la préparation d'une composition selon l'une quelconque des revendications 1 à 12, dans lequel le procédé comprend les étapes de
a. fourniture des particules d'endosperme de grains de maïs soufflés ;
b. fourniture d'au moins une première partie de l'huile liquide ;
c. fourniture de la graisse solide ;
d. préparation d'un mélange fondu de la graisse solide et de la au moins première partie de l'huile liquide
e. dispersion desdites particules dans ledit mélange fondu ; et
f. cristallisation de la graisse solide dans le mélange comprenant les particules dispersées.

14. Utilisation d'une combinaison synergique de graisse solide et de particules d'endosperme de grains de maïs soufflés pour structurer la phase d'huile d'une composition comprenant une phase d'huile, dans laquelle lors du tamisage au moins 80 % en masse desdites particules passent un tamis avec des ouvertures de 500 µm ; et dans laquelle la phase d'huile comprend de 1 à 20 % en masse de ladite graisse solide et de 0,5 à 20 % en masse desdites particules par rapport à la masse de la phase d'huile.
